# EUROPÄISCHE PATENTSCHRIFT

(11) **EP 1 169 200 B1**
(45) Veröffentlichungstag und Bekanntmachung des Hinweises auf die Patenterteilung: **28.07.2004**
(21) Anmeldenummer: 00930994.9
(22) Anmeldetag: 31.03.2000
(51) Int. Cl.: B60R 25/02, E05B 47/00

(54) **EINE VERRIEGELUNGSVORRICHTUNG**
LOCKING DEVICE
DISPOSITIF DE VERROUILLAGE

(30) Priorität: 01.04.1999 AU 2355999
(43) Veröffentlichungstag der Anmeldung: 09.01.2002
(73) Patentinhaber: ROBERT BOSCH GMBH, 70442 Stuttgart (DE)
(72) Erfinder: MODI, Jayesh, Jay, Burwood East, 3151 (AU)
(86) Internationale Anmeldenummer: PCT/DE2000/000968
(87) Internationale Veröffentlichungsnummer: WO 2000/059758

(56) Entgegenhaltungen:
- EP-A- 0 082 323
- DE-A- 3 724 705
- DE-C- 19 621 326
- FR-A- 2 768 204

## Beschreibung

Die vorliegende Erfindung bezieht sich auf eine Verriegelungsvorrichtung und inbesondere eine Verriegelungsvorrichtung für Fahrzeugtürschlösser und Lenksäulensperren.

Verriegelungssysteme, die als Lenksäulensperren benutzt werden, (siehe z.B. Dokument DE-C-196 21 326) haben einen Schließbolzen (lock tongue), der sich zwischen einer Verriegelposition und einer Entriegelposition verschiebt, um in eine mit ihm zusammenwirkende Aussparung oder einen mit ihm zusammenwirkenden Schlitz eines Schlosses in einer Fahrzeuglenksäule einzurücken und daraus wieder auszurücken.
Der Schließbolzen wird normalerweise durch einen Verriegelungsmechanismus bewegt, der von einem Gleichstrommotor der Vorrichtung betrieben werden kann. Der Bolzen ist auch normalerweise mittels einer Feder in die Verriegelposition vorgespannt, so daß wenn er durch den Verriegelungsmechaniusmus verschoben wird, um in den Schlitz in der Lenksaeule einzurücken. und der Schlitz nicht fluchtend mit dem Schließbolzen ist, wenn dann die Fluchtung eintritt, der Bolzen in der Lage ist, in den Schlitz einzurücken, um die Lenksäule zu sperren. Um den Schließbolzen in die Entriegelposition zu verschieben und damit die Lenksäulensperre zu lösen, wird der Verriegelungsmechanismus einfach von dem Motor angetrieben, um den Bolzen auszurücken. Es ist das Ziel der vorliegenden Erfindung, eine Verriegelungsvorrichtung vorzuschlagen, welche die zur Verschiebung des Schließbolzens in eine Entriegelposition beanspruchte Zeit verbessert und die Belastung des Motors reduziert oder zumindest eine zweckmäßige Alternative bietet.

Die vorliegende Erfindung bezieht sich auf eine Verriegelungsvorrichtung, welche folgende einschließt: einen Schließbolzen, einen Verriegelungsmechanismus zur Verschiebung des Schließbolzens, einen Motor zum Antrieb des Verriegelungsmechanismus zwischen der Entriegelposition und der Verriegelposition, und [ein] Spannelement [bias means] zum Vorspannen des Schließbolzens in die Verriegelposition, dadurch gekennzeichnet, daß [ein) weiteres Spannelement zum Vorspannen des Schließmechanismus in die Entriegelposition vorgesehen ist. Vorteilhafterweise können diese Spannelemente Federn sein, und die Verriegelungsvorrichtung kann für eine Lenksäulenverriegelung (Wegfahrsperre) oder ein Türschloß eines Fahrzeugs verwendet werden.

Eine bevorzugte Ausgestaltung der vorliegenden Erfindung wird nachfolgend nur als Beispiel mit Bezug auf die begleitenden Zeichnungen beschrieben. Diese zeigen in:

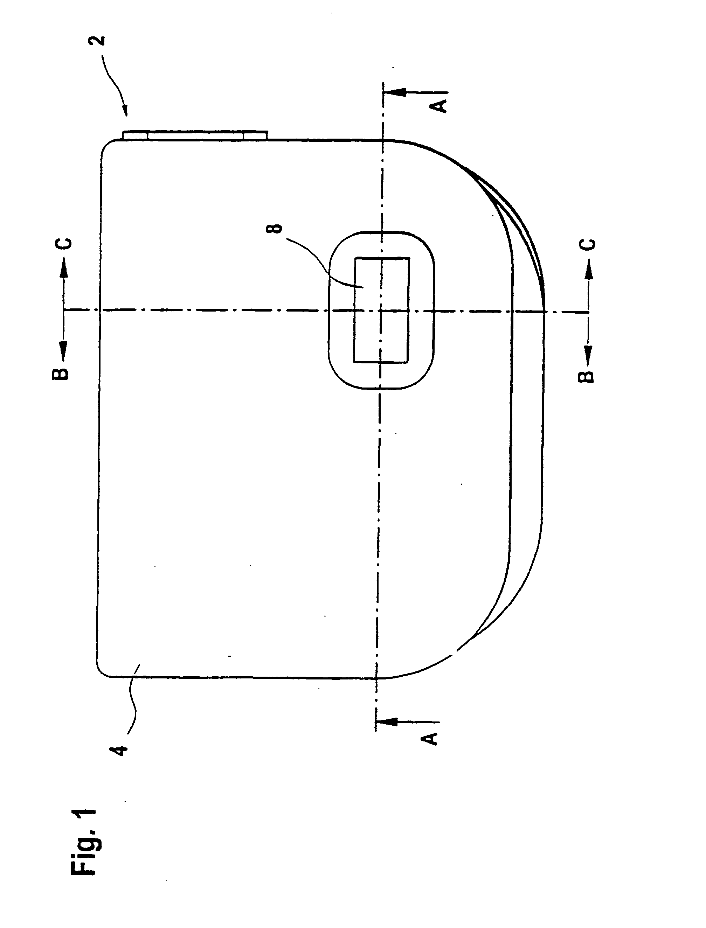

Fig. 1 eine Draufsicht einer bevorzugten Ausführung einer Verriegelungseinrichtung;

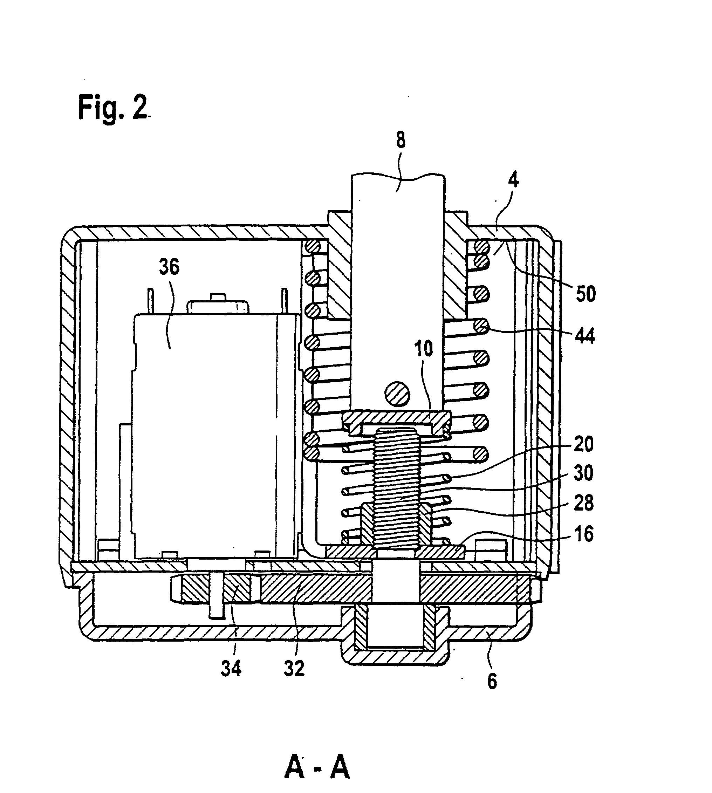

Fig. 2 einen Teilquerschnitt A-A der Verriegelungsvorrichtung in Figur 1;
Fig. 3 einen Teilquerschnitt B-B der Verriegelungsvorrichtung in Figur 1;
Fig. 4 einen Teilquerschnitt C-C der Verriegelungsvorrichtung in Figur 1;

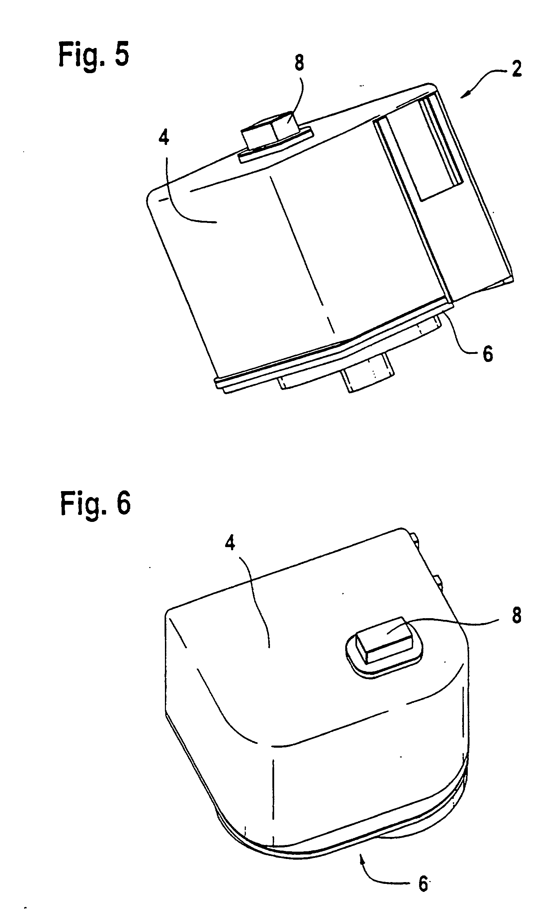

Fig. 5 und 6 sind Ansichten der Verriegelungsvorrichtung in der Perspektive;
Fig. 7 bis 9 sind schematische Ansichten der internen Bestandteile der Verriegelungsvorrichtung in der Pespektive; und
Fig. 10 ist eine Ansicht eines in der Verriegelungsvorrichtung vorgesehenen Stützwinkels in der Perspektive; und
Fig. 11 ist ein Diagramm - Ansprechzeit über Belastung - für die Verriegelungsvorrichtung.

Eine Verriegelungsvorrichtung 2, wie in den Figuren gezeigt, weist ein Gehäuse 4 auf, das auf einer Grundplatte 6 befestigt ist, welche die internen Bestandteile der Vorrichtung 2 trägt. Ein Schließbolzen 8 kann durch eine für den Schließbolzen vorgesehene Öffnung in dem Gehäuse 4 hinausragen und sich in dieser aufwärts- und abwärtsbewegen. Der Schließbolzen wird verschoben, um aus dem Gehäuse 4 herauszuragen und um innerhalb eines mit ihm zusammenwirkenden (nicht gezeigten) Schlitzes eines zu verschließenden Teiles aufgenommen zu werden. Bei diesem Teil kann es sich um eine Lenksäule oder die Tür eines Fahrzeugs handeln. Wenn sie in dem Schlitz aufgenommen wird, befindet sich der Schließbolzen 8 in der verriegelten Stellung. Um das Teil zu entriegeln, wird der Bolzen 8 aus dem Schlitz herausgezogen und in eine Entriegelposition versetzt, wie in den Zeichnungen gezeigt.

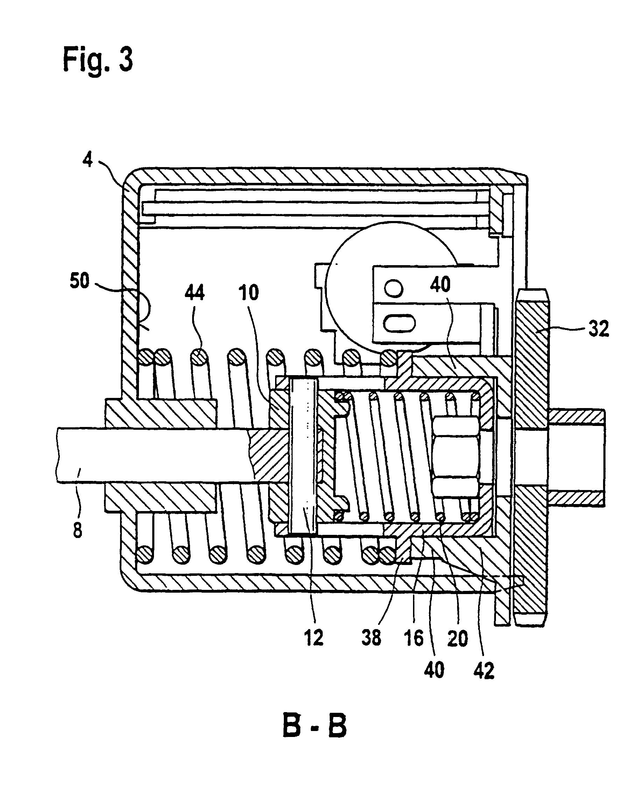

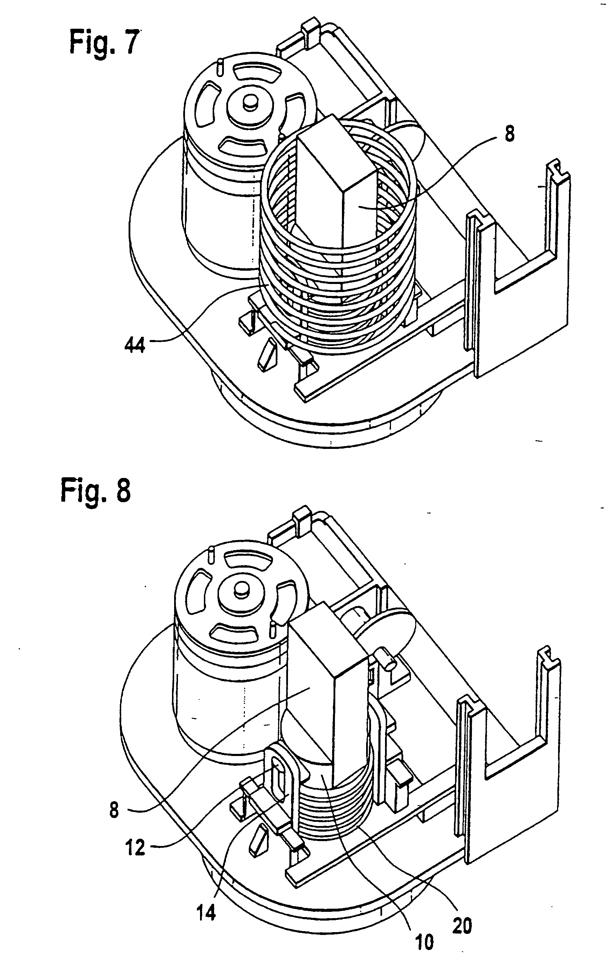

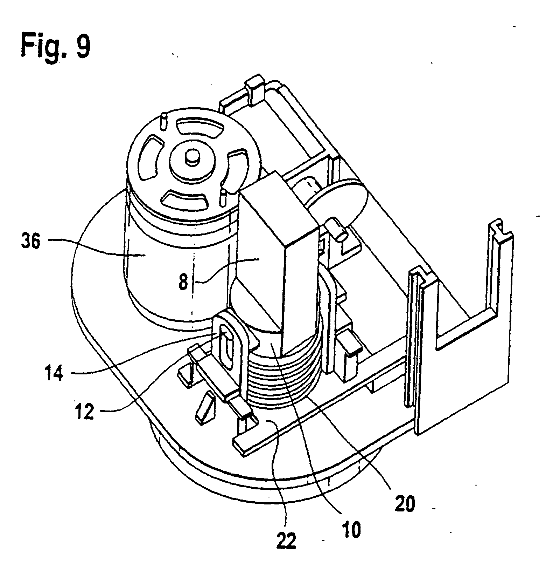

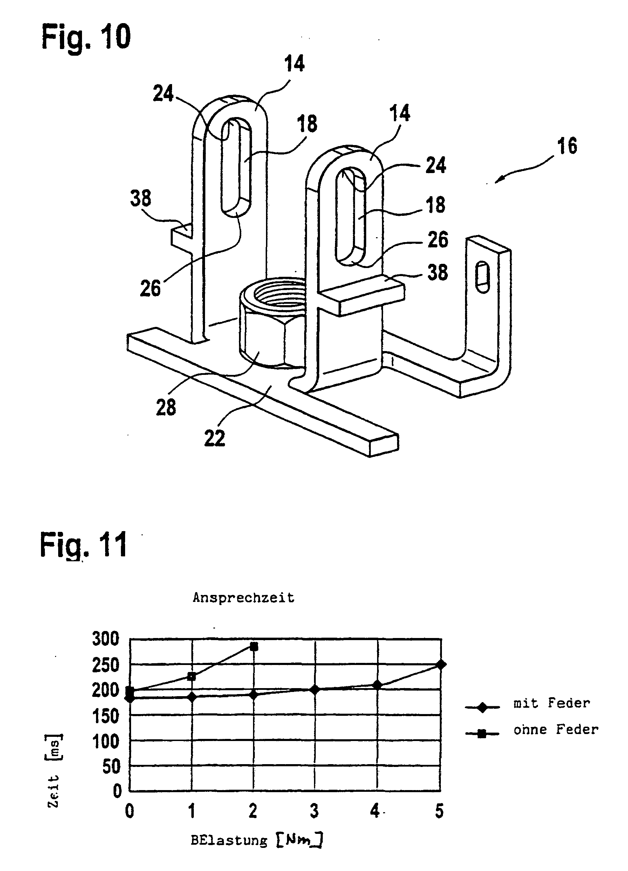

Das untere Ende des Bolzens 8 wird in einer Grundplatte 10 befestigt, welche gegenseitig versetzte Naben 12 aufweist, wie am besten aus Figuren 3, 4 und 8 ersichtlich ist, und ist so ausgestaltet, daß die Grundplatte 10 zwischen einander gegenüberliegend angeordneten Armen 14 eines Stützwinkels 16, wie in Figur 10 gezeigt, gehalten wird und hin- und hergleiten kann. Die Naben 12 passen in die mit ihnen zusammenwirkenden Schlitze 18 in den Armen 14 and sind dort gleitend bewegbar. Die Grundplatte 10 des Bolzens 8 ist in Richtung des oberen Endes 24 der Schlitze 18, gemäß Figuren 3, 4, 8 und 9, mittels einer ersten Feder 20 vorgespannt, die sich vom Boden der Grundplatte 10 bis zur Basis 22 des Stützwinkels 16 erstreckt.

Die Basis 22 des Stützwinkels weist eine Mutter 28 zur Aufnahme einer mit Gewinde versehenen Welle 30 auf. Die Welle 30 wird von einem Zahnrad 32 angetrieben, welches wiederum von einem mit einem 10,2 W Gleichstrommotor 36 der Vorrichtung 2 verbundenen Getriebe 34 angetrieben wird. Wenn die Welle 30 von dem Motor 36 angetrieben wird, rotiert sie und bewegt dadurch den Stützwinkel 16 zwischen einer Entriegelposition, wie in den Zeichnungen abgebildet, und einer Verriegelposition auf und ab, wodurch der Bolzen 8 zurückgezogen bzw. herausgestreckt wird.

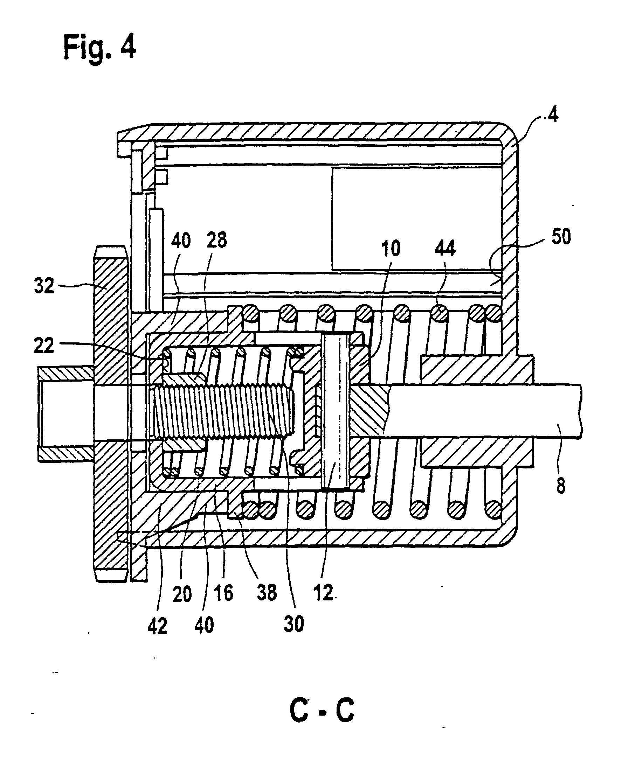

Der Stützwinkel 16 hat zwei seitliche Vorsprünge (Seitenflügel), die sich auf den voneinander abgewandten Seiten der Arme 14 kurz unterhalb dem unteren Ende 26 der Schlitze 18 erstrecken. In der Entriegelposition liegen die Seitenflügel 38 oben auf den Armen 40 einer Aufnahme 42 des Gehäuses 4, gemäß Fig. 3 und 4, auf. Der Stützwinkel 16 wird in diese Entriegelposition durch eine zweite Feder 44 versetzt, die sich zwischen der Innendecke des Gehäuses 4 und den Seitenflügeln 38 erstreckt, wie dies am besten durch Figuren 3 und 4 veranschaulicht ist. Die erste Feder 20 ist daher innerhalb der zweiten Feder 44 untergebracht, wobei sich die Arme 14 zwischen den Federn befinden.

Von der in den Figuren gezeigten Entriegelposition wird der Stützwinkel 16 in die Verriegelposition versetzt, wenn die Welle 30 entsprechend entgegen der Wirkung der zweiten Feder 44 getrieben wird. Wenn der Stützwinkel 16 aufwärts in Richtung der Decke 50 des Gehäuses 4 bewegt wird, bewegt sich der obere Teil des Schließbolzens 8 in den Schlitz der Lenksäule oder der Tür, wenn der Bolzen mit dem Schlitz fluchtend ist. Wenn das Lenksäulen- oder Türschloß so positioniert ist, daß der mit dem Bolzen zusammenwirkende Schlitz nicht mit diesem fluchtend ist, dann wird das herausragende Ende des Schließbolzens 8 in die Lenksäule oder Tür einrücken und damit beginnen, der ersten Feder 20 derart entgegenzuwirken, daß die Naben 10 sich nach dem unteren Ende der Schlitze 18 hin bewegen. Da der Stützwinkel 16 in der Verriegelposition verbleibt, wird der Schließbolzen 8 letztendlich in den fluchtenden mit ihm zusammenwirkenden Schlitz gleiten, und zwar nach Verschiebung der Lenksäule oder Tür unter der Einwirkung der ersten Feder 20, welche die Grundplatte 10 und die Naben 12 aufwärts zum oberen Ende 24 der Schlitze 18 hin bewegt. Um den Schließbolzen 8 auszurücken und ihn in die Entriegelposition zurückzuziehen, wird der Stützwinkel 16 in die Entriegelposition verbracht und zwar dadurch, daß der Motor 36 die Welle 30 mittels der zweiten Feder 44 in die umgekehrte Richtung treibt. Der Motor 36 wird durch eine elektronische Steuereinheit der Einrichtung 2 angetrieben, welche Verriegel- und Entriegelsignale empfängt und welche mit zwei Mikroschaltern der Einrichtung 2 verbunden ist, welche Verriegel- und Entriegelpositionen für den Motor 36 und den Stützwinkel 16 darstellen.

Einen Verriegelungsmechanismus herzustellen, der durch die zweite Feder 44 vorgespannt ist, ist besonders vorteilhaft, da dadurch die Zeit erheblich verbessert wird, die erforderlich ist, um den Schließbolzen 8 in eine Verriegelposition zu verbringen, d.h. die Ansprechzeit, sowie das Verhalten der Einrichtung 2 hinsichtlich Belastung zu verbessern. Um dies zu veranschaulichen, enthält die Tabelle 1 die Ansprechzeiten zum Verschieben des Bolzen zwischen den Verriegel- und Entriegelpositionen und zwar mit und ohne die Feder 44 unter unterschiedlichen Belastungsbedingungen. Die Belastungsziffern in der Tabelle sind in Nm angegeben als das auf eine durch die Vorrichtung 2 verschlossene Lenksäule angesetzte Moment. Die Ansprechzeiten für die Entriegelung der Vorrichtung 2 mit oder ohne die zweite Feder 44 sind in Figur 11 angegeben, welche die durch die Verriegelungsvorrichtung erzielte bedeutende Verbesserung veranschaulicht. Die Anordung der Verriegelungsvorrichtung 2 ist besonders vorteilhaft, da sie die Leistung erheblich verbessert und gegebenenfalls eine Reduktion der Motorgröße und -leistung zuläßt, während sie gleichzeitig dieselbe Leistungsfähigkeit bietet, wie derzeit bekannte Verriegelungsvorrichtungen.

Eine Vielzahl von Änderungen und Abwandlungen werden dem Fachlcundigen gegenwärtig sein, ohne von dem Sinn oder Umfang der mit Bezug auf die beiliegenden Zeichnungen beschriebenen Erfindung abzuweichen.

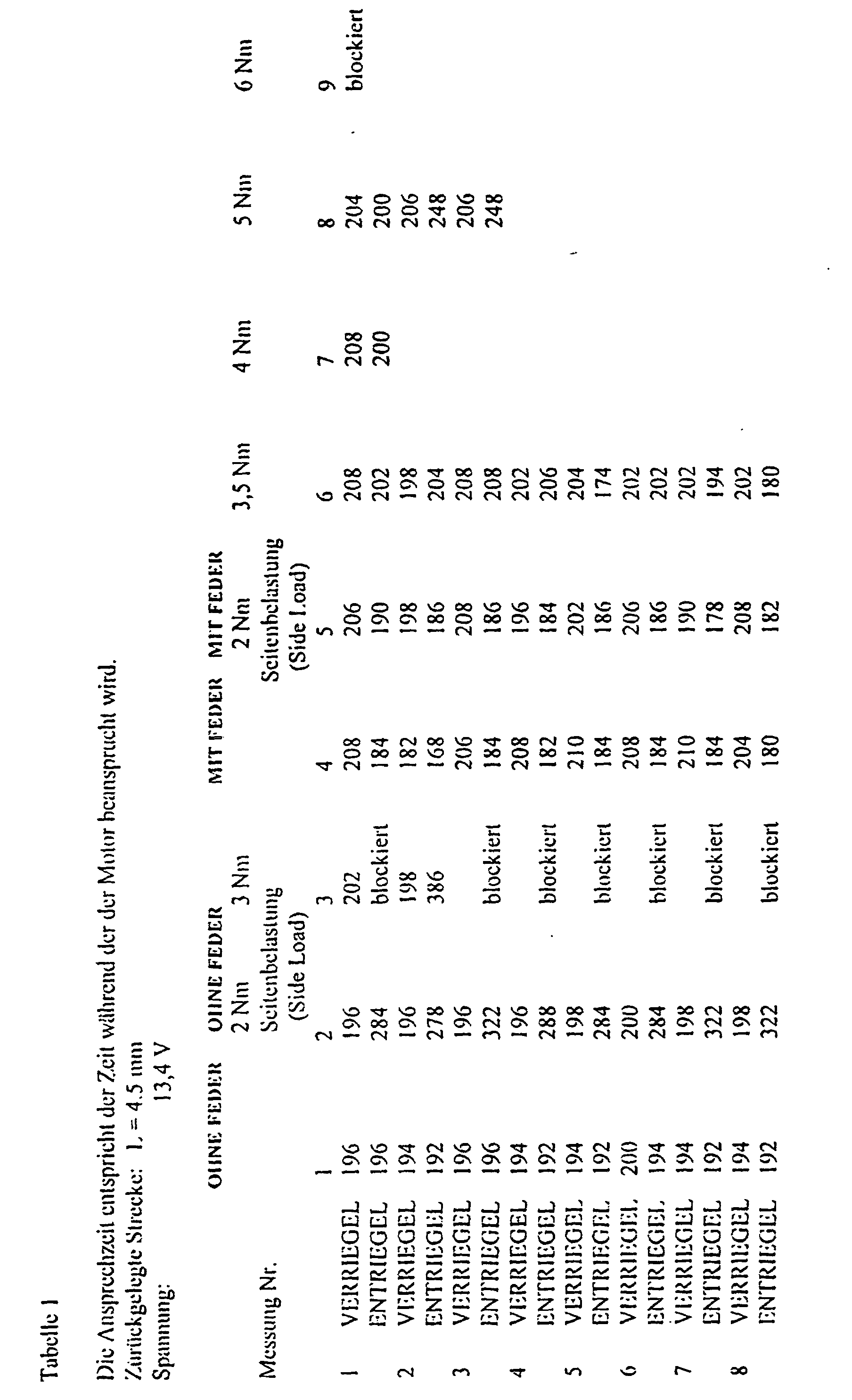

## Patentansprüche

1. Eine Verriegelungsvorrichtung umfaßt einen Schließbolzen (8), einen Verriegelungsmechanismus (16,30,32,34) zur Verschiebung des Schließbolzens. einen Motor (36) zum Antrieb des Verriegelunizsmechanismus zwischen der Entriegelposition und der Verriegelposition, und ein Spannelement (20) zum Vorspannen des Schließbolzens in die Verriegelposition, **dadurch gekennzeichnet, daß** zumindest ein weiteres Element (44) zum Vorspannen des Verriegelungsmechanismus in die Entriegelposition vorgesehen ist.

2. Eine Verriegelungsvorrichtung nach Anspruch 1, **dadurch gekennzeichnet, daß** der Verriegelungsmechanismus einen Stützwinkel (16) einschließt, der von einer Welle zwischen den Verriegel- und Entriegelpositionen getrieben wird, wobei die Welle (30) von dem Motor (36) angetrieben wird.

3. Eine Verriegelungsvorrichtung nach Anspruch 2, **dadurch gekennzeichnet, daß** der Stützwinkel einander gegenüberliegende Arme aufweist, welche gleitend einen unteren Teil des Schließbolzens aufnehmen, wobei sich das Spannelement zwischen dem unteren Teil und einer Basis des Stützwinkels befindet.

4. Eine Verriegelungsvorrichtung nach Anspruch 3, **dadurch gekennzeichnet, daß** ein weiteres Spannelement auf den Stützwinkel einwirkt.

5. Eine Verriegelungsvorrichtung nach Anspruch 4, **dadurch gekennzeichnet, daß** das Spannelement zwischen den Armen angeordnet ist und das weitere Spannelement um die Arme angeordnet ist.

6. Eine Verriegelungsvorrichtung nach Anspruch 4 oder 5, **dadurch gekennzeichnet, daß** der Stützwinkel hervorstehende Glieder aufweist, auf welche das weitere Spannelement einwirkt.

7. Eine Verriegelungsvorrichtung nach Anspruch 6, **dadurch gekennzeichnet, daß** das weitere Spannelement zwischen einem Gehäuse der Vorrichtung und den hervorstehenden Gliedern angeordnet ist.

8. Eine Verriegelungsvorrichtung nach einem beliebigen der Ansprüche 1 bis 7, **dadurch gekennzeichnet, daß** das Spannelement bzw. das weitere Spannelement Federn sind.

## Claims

1. Locking device which comprises a lock tongue (8), a locking mechanism (16, 30, 32, 34) for displacing the lock tongue, a motor (36) for driving the locking mechanism between the release position and the locking position, and a tensioning element (20) for pretensioning the lock tongue into the locking position, **characterized in that** at least one further element (44) is provided for pretensioning the locking mechanism into the release position.

2. Locking device according to Claim 1, **characterized in that** the locking mechanism encloses a supporting bracket (16) which is driven between the locking and release positions by a shaft, the shaft (30) being driven by the motor (36).

3. Locking device according to Claim 2, **characterized in that** the supporting bracket has mutually opposite arms which accommodate a lower part of the lock tongue in a sliding manner, with the tensioning element being situated between the lower part and a base of the supporting bracket.

4. Locking device according to Claim 3, **characterized in that** a further tensioning element acts on the supporting bracket.

5. Locking device according to Claim 4, **characterized in that** the tensioning element is arranged between the arms and the further tensioning element is arranged around the arms.

6. Locking device according to Claim 4 or 5,
**characterized in that** the supporting bracket has protruding members on which the further tensioning element acts.

7. Locking device according to Claim 6, **characterized in that** the further tensioning element is arranged between a housing of the device and the protruding members.

8. Locking device according to any one of Claims 1 to 7, **characterized in that** the tensioning element and the further tensioning element are springs.

## Revendications

1. Dispositif de verrouillage comprenant une cheville de fermeture (8), un mécanisme de verrouillage (16, 30, 32, 34) destiné à déplacer la cheville de fermeture, un moteur (36) destiné à entraîner le mécanisme de verrouillage entre une position de déverrouillage et une position de verrouillage et un élément de contrainte (20) destiné à contraindre la cheville de fermeture en position de verrouillage,
**caractérisé par**
au moins un autre élément (44) destiné à contraindre le mécanisme de verrouillage en position de déverrouillage.

2. Dispositif de verrouillage selon la revendication 1,
**caractérisé en ce que**
le mécanisme de verrouillage comprend une cornière d'appui (16) poussée par un axe entre les positions de verrouillage et de déverrouillage, l'axe (30) étant entraîné par le moteur (36).

3. Dispositif de verrouillage selon la revendication 2,
**caractérisé en ce que**
la cornière d'appui présente des bras, situés l'un en face de l'autre, qui reçoivent de façon coulissante une partie inférieure de la cheville de fermeture, l'élément de contrainte se trouvant entre la partie inférieure et une base de la cornière d'appui.

4. Dispositif de verrouillage selon la revendication 3,
**caractérisé en ce qu'**
un autre élément de contrainte agit sur la cornière d'appui.

5. Dispositif de verrouillage selon la revendication 4,
**caractérisé en ce que**
l'élément de contrainte est disposé entre les bras et l'autre élément de contrainte est disposé autour des bras.

6. Dispositif de verrouillage selon la revendication 4 ou 5,
**caractérisé en ce que**
la cornière d'appui présente des organes saillants sur lesquels agit l'autre élément de contrainte.

7. Dispositif de verrouillage selon la revendication 6,
**caractérisé en ce que**
l'autre élément de contrainte est disposé entre un boîtier du dispositif et les organes saillants.

8. Dispositif de verrouillage selon l'une quelconque des revendications 1 à 7,
**caractérisé en ce que**
l'élément de contrainte ou l'autre élément de contrainte sont des ressorts.
